# EUROPEAN PATENT SPECIFICATION

(11) **EP 4 356 868 B1**
(45) Date of publication and mention of the grant of the patent: **19.11.2025**
(21) Application number: 23197270.4
(22) Date of filing: 13.09.2023
(51) Int. Cl.: A61C 7/08

(54) **ORTHODONTIC APPLIANCES, ATTACHMENTS, SYSTEMS INCLUDING APPLIANCES AND ATTACHMENTS, AND METHODS FOR ORTHODONTIC APPLIANCE AND ATTACHMENT FABRICATION**
ORTHODONTISCHE VORRICHTUNGEN, BEFESTIGUNGEN, SYSTEME MIT VORRICHTUNGEN UND BEFESTIGUNGEN SOWIE VERFAHREN ZUR ORTHODONTISCHEN VORRICHTUNG UND BEFESTIGUNGSHERSTELLUNG
APPAREILS ORTHODONTIQUES, FIXATIONS, SYSTÈMES COMPRENANT DES APPAREILS ET FIXATIONS, ET PROCÉDÉS POUR APPAREIL ORTHODONTIQUE ET FABRICATION DE FIXATION

(30) Priority: 21.10.2022 US 202218048666
(43) Date of publication of application: 24.04.2024
(73) Proprietor: Ormco Corporation, Brea, CA 92821 (US)
(72) Inventor: Tsai, Evan Yifeng, Rancho Cucamonga, 91739 (US); Grande, Michael, Brea, 92821 (US)
(74) Representative: Cleveland Scott York

(56) References cited:
- WO-A1-2023/177775
- US-A1- 2011 269 092

## Description

### CROSS REFERENCE TO RELATED APPLICATION

This application claims priority to U.S. Application Serial No. 29/866,462, filed September 13, 2022.

### TECHNICAL FIELD

The present invention relates generally to the field of orthodontic treatment, and more particularly to orthodontic appliances, attachments for teeth, attachments engageable with orthodontic appliances, and methods of manufacturing orthodontic appliances and attachments.

### BACKGROUND

Orthodontics is the practice of manipulating teeth to correct malocclusions between the teeth of the upper and lower dental arches. Typically, treatment of malocclusions includes the use of an orthodontic appliance that applies corrective forces to the teeth. Over time, these corrective forces coerce the teeth to move into their orthodontic ally correct positions.

One way of applying corrective forces is with orthodontic appliances referred to as "dental aligners," or simply "aligners." Aligners are generally supplied as a series of removable appliances that incrementally reposition the patient's teeth from their initial orientation to their orthodontic ally correct orientation. Patients being treated with aligners can insert and remove the aligners at will, and therefore do not need to visit the orthodontist for archwire changes as is often necessary with orthodontic brackets. Rather, when the currently worn aligner has moved the teeth to at or near a final orientation for that aligner, the patient merely begins using the next aligner in the series according to a treatment plan.

To fabricate aligners, the orthodontist first obtains a computer model of the patient's dentition. This model may be generated, for example, by taking an impression of the dentition and scanning the impression into a computer. Once the computer model has been obtained, the orthodontist may determine a target orientation of the teeth that provides a corrected dentition. Multiple computer models may then be generated, with each model corresponding to an incremental orientation of the dentition from an initial orientation to a target orientation. The incremental orientations from initial to target orientations may move the patient's teeth according to a proposed treatment plan. Treatment plans typically include numerous stages of movement from an initial orientation to a target orientation of the teeth. Depending on the degree of tooth movement, treatment plans may include a series of individual aligners that are worn in a predetermined sequence from an initial orientation to a final orientation according to the treatment plan.

Aligners may be configured to be used in conjunction with dental attachments, referred to as "attachments". Attachments are solid objects bonded to one or more of the patient's teeth. The attachment is adhesively secured to a tooth and protrude outwardly from the tooth. The aligner is then fabricated to fit over both the attachment and tooth. For specific tooth movements, the attachment gives the aligner more leverage such that the applied forces on the tooth may be increased or in a different direction relative to use of an aligner alone. Among many other benefits, clinicians are able to better control and predict tooth movement. Ultimately, this arrangement can also decrease treatment time. When used in conjunction with aligner treatment, attachments may allow more aggressive treatment plans and the correction of more significant and pronounced dental malocclusions relative to aligner treatment without attachments.

Other orthodontic appliances may be used in conjunction with aligners. For example, elastic bands can be coupled to the aligner at one end and be secured to another aligner on the opposing jaw at the other end. When stretched, the elastic band applies additional forces on one or more teeth. Aligners with the aid of elastic bands can be useful in correcting underbite and overbite. Attachment of an elastic band to an aligner is typically achieved by modifying a gingival edge of the aligner to create an attachment point. For example, the gingival edge may be cut in two locations, and the elastic member is then looped through each of the cuts. This may be referred to as a hook cutout. An intermediate portion of the aligner between the cuts is bent outwardly so that the elastic band fits between the aligner and the tooth/gingiva. Attaching an elastic member at this location can create problems.

First, the increased corrective forces applied to the dental aligner by the elastic band adds stress at the location of the attachment point, particularly at the cut locations. Shear forces at these points tend to tear the aligner at the cuts, which concentrate stress. Absent tearing, high stresses at these locations can cause the material to deform and possibly prematurely fail. Failure can be by excessive bending, ripping, and/or tearing. Failure may prohibit the aligner from effectively treating the patient and may require that the aligner be replaced. Either way, failure prolongs treatment time.

Second, cutting the aligner introduces a defect at or near the gingival edge and so reduces the structural integrity of the aligner, potentially making the aligner less effective for tooth movement in the absence of the elastic band. Again, this may prolong treatment time.

Use of hook cutouts is also problematic. New patients find it difficult to locate each of the cuts, even when looking in a mirror. Since the hook cutout does not produce a significant tactile feature, it is difficult for the patient to find the hook cutout by touch. And, even after finding the hook cutout, the patient must both hold the edge out and insert an elastic band. This usually takes some practice and so can be aggravating for the patient and can create an issue with compliance.

In addition to the hook cutout, elastic bands may be utilized in conjunction with aligners via a button cutout. A button cutout is essentially a hole in a side of the aligner. A button, which is a metal or a plastic object is bonded to the patient's tooth. The cutout fits over the button. In this way, the button is accessible for the patient or the clinician to attach an elastic band. Because the button is bonded to the surface of the tooth, there is a percentage of bond failures, usually due to accidental contact with another object. Bond failures require an emergency appointment during which the button is rebonded. For this reason, treatment may be interrupted.

US2011269092A1 (ALIGN TECHNOLOGY INC) describes orthodontic positioning devices, and related methods and systems, for use with one or more orthodontic elastic members. The devices are configured to couple with an orthodontic elastic member so as to react a force from the elastic member into the appliance to, for example, generate traction forces on the patient's teeth to produce a desired occlusion. A positioning device includes a patient removable tooth positioning appliance having teeth receiving cavities shaped to receive and apply a resilient positioning force to a patient's teeth. The appliance includes a hook configured to interface with an orthodontic elastic member. The hook can be configured to be offset from a surface of a tooth when the appliance is coupled with the patient's teeth and no elastic member is coupled with the tooth. The hook can be curved so that the hook is more retentive on the aligner. The hook can be reinforced so that the reinforcement resists deformation when the elastic is in place.

WO2023177775A1 (ORMCO CORP) describes an aligner including a feature positioned on or in at least one of the buccal sidewall or lingual sidewall of the aligner that is configured to attach to an elastic member. The aligner applies a greater corrective force to a patient's dentition when the elastic member is attached. The feature may include a protrusion in the sidewall with an opening to a space configured to receive and attach to an elastic member hook coupled to the elastic member. The feature may include a through-bore in the sidewall that is configured to receive and attach to the elastic member. The feature may include an add-on hook on the sidewall that is configured to receive and attach to the elastic member. The add-on hook may be positioned on a protrusion in the sidewall. The protrusion may receive and engage with a dental attachment positioned on a surface of a patient's tooth.

While generally commercially successful, there is a need for improved orthodontic appliances, attachments, systems, and methods are needed.

### SUMMARY

The present invention overcomes the shortcomings and drawbacks in orthodontic systems including orthodontic aligners and attachments heretofore known for use in orthodontic treatment. While the invention will be described in connection with certain embodiments, it will be understood that the invention is not limited to those embodiments. On the contrary, the invention includes all alternatives, modifications and equivalents as may be included within the spirit and scope of the present invention.

According to a first aspect of the present invention there is provided a system for orthodontic treatment as set out in appended claims 1 to 13. According to a second aspect of the present invention there is provided a method of manufacturing the orthodontic aligner of the system as set out in appended claim 14.

In accordance with the principles of the present invention, an orthodontic aligner for orthodontic treatment of a patient's teeth includes a shell that defines at least one tooth cavity. The tooth cavity is configured to receive at least one of the patient's teeth and has an edge that defines an opening through which the tooth cavity receives the patient's tooth. The shell has wall portions. An integral hook extends outwardly from one of the wall portions adjacent the tooth cavity and is spaced occlusally apart from the edge. The integral hook has a side wall that defines an interior space and a window. The interior space opens to the tooth cavity. The window extends through the side wall so that the interior space is accessible through the window.

In one embodiment, the side wall of the integral hook includes a mesial wall, a distal wall, an occlusal wall, and a gingival wall, and the window extends along at least any two walls or extends along any three walls.

In one embodiment, the window opens in one of an occlusal direction, a gingival direction, a mesial direction, or a distal direction when the orthodontic aligner is positioned on the patient's teeth. In some variants, the window is a wedge shape.

In one embodiment, at least a portion of the window is sized to interfere with insertion of an elastic band.

In one embodiment, the window includes a through wall that intersects an outer surface and an inner surface of the side wall of the integral hook. The through wall has opposing portions that define a first width at an opening of the window, and the through wall has opposing portions that define a second width near an end of the opposing portions of the through wall. The first width is greater than the second width. In some variants, the first width is greater than a diameter of an elastic band so that the opening is configured to receive the elastic band. In some variants, the second width is less than the diameter of the elastic band so that there is an interference fit between the elastic band and the window at the second width.

In one embodiment, the side wall has a generally bubble-like configuration.

In one aspect of the invention, there is a system for orthodontic treatment. In one embodiment, the system includes one embodiment of the orthodontic aligner and an attachment configured to be secured to the patient's tooth. The integral hook of the orthodontic aligner is configured to receive the attachment when the orthodontic aligner is placed on the at least one of the patient's teeth. The attachment is accessible through the window. In some variants, the attachment does not fill the interior space of the integral hook. For example, in one embodiment, the attachment fills 75% or less of the interior space of the integral hook. By way of further example, in one embodiment, the attachment fills more than 35% of the interior space of the integral hook.

In one embodiment, the attachment does not fill the interior space of the integral hook so that an unfilled portion of the interior space between the attachment and the side wall of the integral hook is accessible through the window.

In one embodiment, the window includes a through wall that intersects an outer surface and an inner surface of the side wall, and the through wall has opposing portions that define a first width at an opening of the window and that define a second width near an end of the opposing portions of the through wall. In some variants, the first width is greater than the second width. In other variants, the first width is less than the second width.

In one embodiment, a depth of the window from the opening to the end of the opposing portions of the through wall is greater than a distance measured from the opening to a surface of the attachment when the orthodontic aligner is placed on the patient's teeth.

In one embodiment, the system further includes an elastic band. The elastic band is insertable into the window to contact the attachment. After insertion, the elastic band is held in place in the window by the integral hook. In some variants, the elastic band and/or the integral hook are elastically deformed when the elastic band is in contact with the attachment.

In one embodiment, the integral hook grips the elastic band when the elastic band is in contact with the attachment.

In one aspect of the invention, there is a method of manufacturing one or more embodiments of the orthodontic aligner. The method includes preparing a mold including one or more projections in a configuration of one or more of the patient's teeth and a hook mold extending outwardly from the one or more projections. The method further includes deforming a workpiece over the mold including over the hook mold to create a deformed region of the workpiece including a preformed hook, and removing a portion of the preformed hook to form the window.

### BRIEF DESCRIPTION OF THE DRAWINGS

The accompanying drawings, which are incorporated in and constitute a part of this specification, illustrate embodiments of the invention and together with the detailed description given below, serve to explain various aspects of the invention.
Fig. 1 is a perspective view of a system according to one embodiment of the invention with an aligner in position with respect to a corresponding jaw including an attachment.
Fig. 2 is a perspective view of the aligner of Fig. 1 in position for orthodontic treatment of the jaw shown in Fig. 1.
Fig. 3 is a perspective view of a system including the aligner and attachment shown in Fig. 2 and illustrating an elastic band engaged with a temporary anchorage device in accordance with one embodiment of the invention.
Fig. 4 is an enlarged perspective view of the aligner shown in Fig. 1.
Fig. 5 is an enlarged view of the aligner shown in Fig. 4.
Fig. 6 is an enlarged view of an integral hook shown in the aligner of Fig. 5.
Fig. 7A is a cross-sectional view of one embodiment of the integral hook taken along section line 7-7 of Fig. 5.
Figs. 7B-7D are cross-sectional views of alternative embodiments of an integral hook according to embodiments of the invention.
Fig. 8 is an enlarged perspective view of the attachment of Fig. 1 according to one embodiment of the invention.
Figs. 9 and 10 are a top left perspective view and bottom right perspective view, respectively, of an attachment of Fig. 8.
Fig. 11 is an enlarged perspective view of the exemplary system of Fig. 3 according to one embodiment of the invention.
Fig. 12 is an enlarged perspective view of an attachment and integral hook arrangement of Fig. 11 in the absence of the elastic shown in Fig. 11 according to one embodiment of the invention.
Fig. 13 is an elevation view of the attachment and the integral hook of Fig. 12.
Fig. 14 is cross sectional view of the attachment and the integral hook taken along section line 14-14 of Fig. 11 showing an elastic band engaged with the attachment.
Fig. 14A is side elevation view of the attachment and the integral hook of Fig. 11 showing an elastic band engaged with the integral hook.
Fig. 15 illustrates a perspective view of one method of manufacturing the aligner of Fig. 1 illustrating a tooth mold and a formed workpiece.
Fig. 16 is an enlarged view of the tooth mold of Fig. 15 illustrating a hook mold according to one embodiment of the invention.
Figs. 17 and 18 are perspective and side elevation views of the hook mold of Fig. 16.
Fig. 19 is a schematic side elevation view of the worksheet formed over the hook mold of Fig. 16.
Fig. 20 is a side elevation view of an integral hook following forming of window in the deformed worksheet of Fig. 19.

### DETAILED DESCRIPTION

Embodiments of the invention are directed to an orthodontic treatment system including one or more orthodontic appliances. Exemplary systems include one or more dental aligners and/or attachments for use with dental aligners. In one embodiment, the dental aligner includes an integral hook that is formed at a location adjacent a patient's tooth surface and is spaced apart occlusally from a gingival edge of the aligner. Thus, one advantage of the integral hook is that the aligner retains its structural strength during use, because the absence of any modification of the gingival edge of the aligner. The exemplary integral hook can receive an elastic band. Exemplary embodiments may include an attachment that is configured to be secured to the tooth. The attachment and the integral hook may be configured to cooperate with one another during orthodontic treatment. This cooperation may facilitate additional or different forces on a selected one or more teeth. Further, the attachment may be directly externally accessible through a window in the integral hook. As an example, a portion the elastic band may be inserted in the window and into direct contact with one or both the attachment and the integral hook. The other end of the elastic band may be connected to an aligner on the opposing jaw, for example, and so facilitate the inter-arch, or top-to-bottom, configuration for pulling the patient's jaw forward or backward depending on the desired treatment. This configuration is advantageous because forces generated by the elastic band may be carried by the attachment alone or by a combination of the attachment and aligner. In some variants, the system can include an elastic band that extends from a first integral hook of an aligner worn on a jaw of a patient to a second integral hook on the same aligner or to a button attached to a tooth in the same jaw on which the aligner is worn. In some variants, the system can include an elastic band that extends from a first integral hook of an aligner worn on a jaw of a patient to a second integral hook on a second aligner worn on an opposing jaw or to a button attached to a tooth in the opposing jaw.

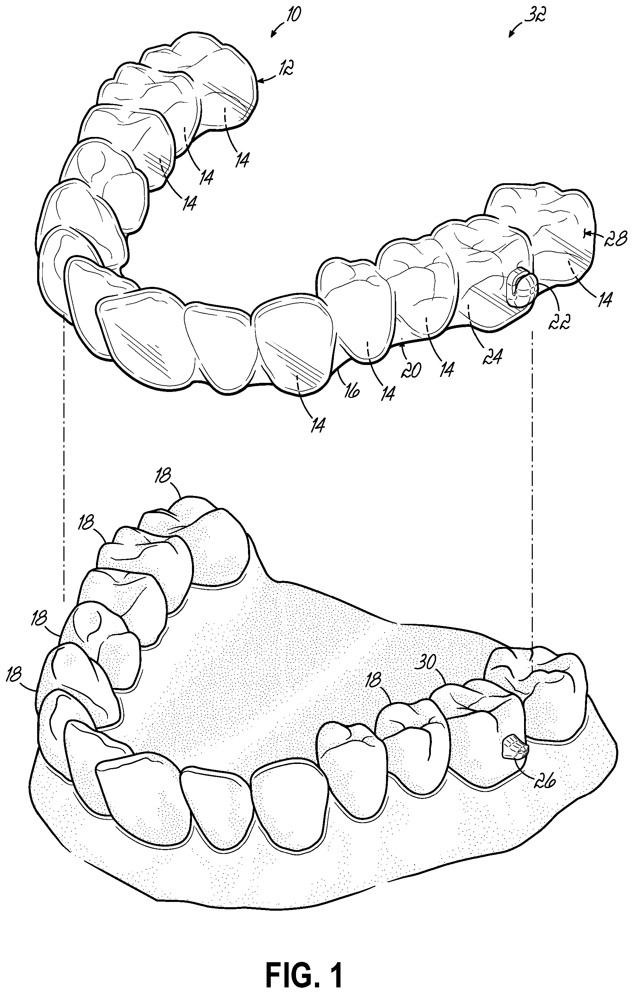

To these and other ends, and referring to Figs. 1, 2, and 3, in an exemplary embodiment of the invention, a dental aligner 10 includes a hollow shell 12 that is configured to encapsulate one or more crowns of a patient's teeth. The shell 12 may be an elastic material in one or more layers and is formed with a plurality of cavities 14 that collectively define an edge 16. Each cavity 14 is shaped to receive a specific one of the patient's teeth 18. The edge 16 defines an opening 20 in the shell 12. As indicated in Fig. 1, the cavities 14 receive respective ones of the patient's teeth 18 through the opening 20.

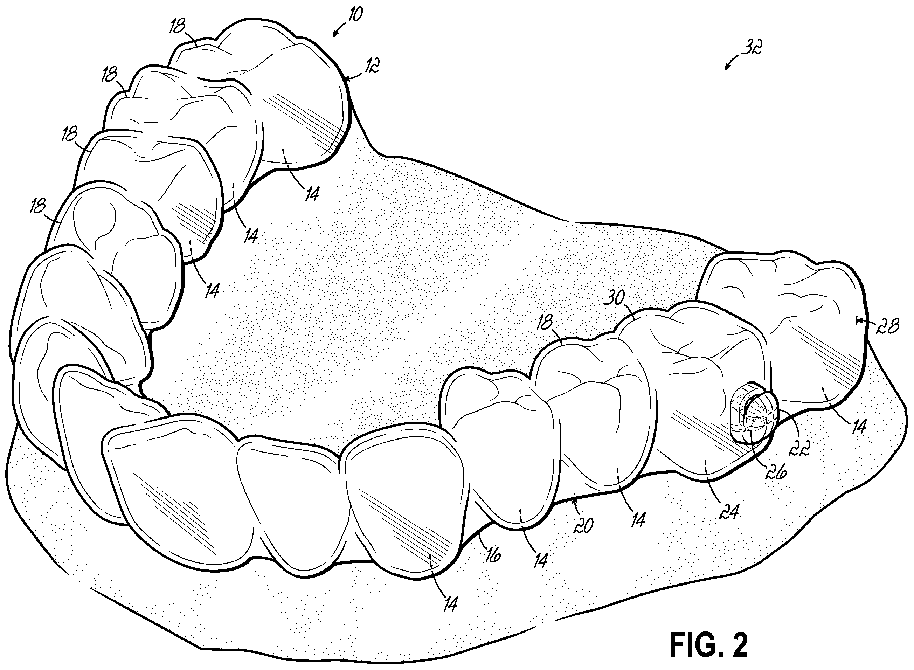

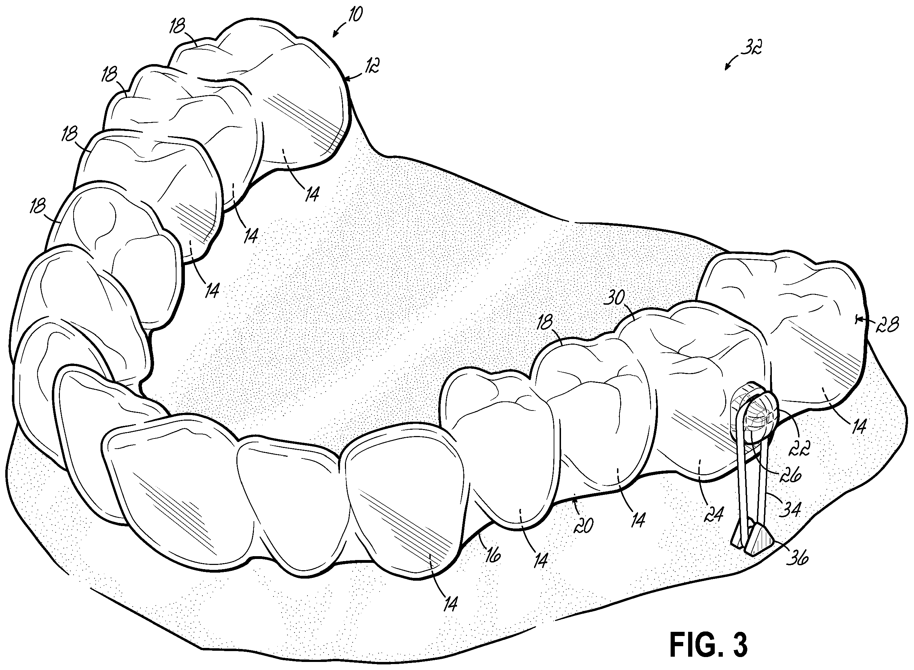

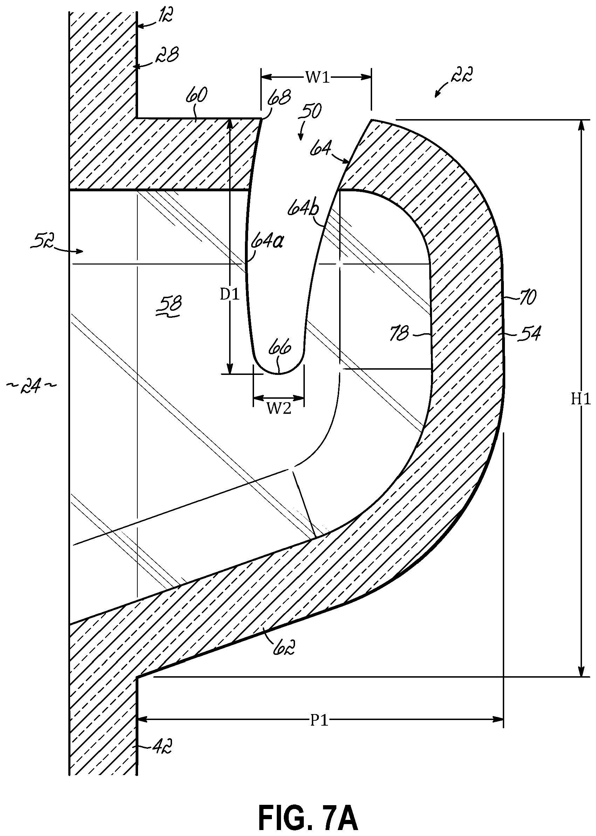

In the depicted, non-limiting exemplary embodiment, the aligner 10 includes an integral hook 22 in the shell 12. The integral hook 22 has an outer wall 28 that forms a tooth cavity 24 of the aligner 10 and facilitates orthodontic treatment according to an orthodontic treatment plan. The outer wall 23 can define an interior space 52 (Fig. 7A) of the integral hook 22. The interior space 52 can be sized to receive an attachment 26 bonded to a tooth of the jaw on which the aligner 10 is worn. With continued reference to Fig. 1, the integral hook 22 may receive the attachment 26 shown on tooth 30. The attachment 26 can be received in the integral hook 22 when the aligner 10 is positioned on the patient's teeth as is shown in Figs. 2 and 3. In one embodiment, the aligner 10 in conjunction with the attachment 26 forms a system 32 for orthodontic treatment and may be utilized with an elastic band 34 or other elastic member, an example of which is shown in Fig. 3. As described herein, the elastic band 34 can pass through a window 50 (Fig. 7A) disposed on the outer wall 23 of the integral hook 22 to reach an attachment 26 seated within the interior space 52 of the integral hook 22. As shown in Fig. 1, the outer wall 23 can have a bubble-like or rounded-rectangular shape that helps splay the elastic band 34 over the attachment 26. The window 50 and the bubble-like shape of the outer wall 23 assist the patient in seating the elastic band 34 onto the attachment 26. In some arrangements, the integral hook 22 can help a patient seat an elastic band 34 onto an attachment 26 without requiring the patient to see the integral hook 22.

Referring to Figs. 2 and 3, during orthodontic treatment, the dental aligner 10 is selectively positionable over the patient's teeth 18. The integral hook 22 receives the attachment 26. The shell 12 may fit tightly over the teeth 18 at least partly due to slight differences in the position of one or more of the cavities 14 relative to the position of the corresponding tooth. This misalignment may be intentional according to a treatment plan developed for the patient. As a result of these misalignments, the aligner 10 may elastically deform while positioned over the patient's teeth 18. The elastic deformation may be observable as a measurable amount of bulk strain or localized strain in the shell 12. The strain in the shell 12 produces pressure on the teeth as the shell 12 attempts to return to an un-strained condition or a reduced strain configuration. The forcible contact with the aligner 10 may move the patient's teeth toward a predetermined position according to a patient's treatment plan. In that regard, the integral hook 22 may be misaligned with the attachment and so the hook 22 may forcibly engage the attachment 26 depending on the intended movement of the tooth 30.

As shown in Fig. 3, the system 32 may further include the elastic band 34, which in the exemplary embodiment, is shown engaged with the integral hook 22 and a temporary anchorage device (TAD) 36. In the example, the TAD 36 provides a fixed anchor point to which the elastic band 34 is connected. Although not shown, the elastic band 34 may be attached to the patient's opposing jaw in a top-to-bottom configuration that is designed to move one or both jaws in a predetermined direction.

In one embodiment of the invention, a set of aligners (not shown) may include one or more dental aligners 10. During orthodontic treatment, each of the aligners in the set may differ slightly so that they each provide slightly different movement of the teeth. Each aligner 10 may include one or more of the integral hooks 22 to cooperate with a corresponding attachment 26. The location of the one or more integral hooks 22 and attachments 26 may change for each aligner 10. In other words, the set of aligners may correspond to a set of attachments with the number and location of the attachments changing in individual ones of the set of aligners. During treatment, the attachments may be removed from one tooth and new attachments added to another tooth. The individual dental aligners are utilized in a predetermined sequence to complete orthodontic treatment. Accordingly, each aligner 10 in the set of aligners may move one or more teeth a prescribed amount. Cumulatively, these individual amounts may result in complete treatment of the patient's malocclusion.

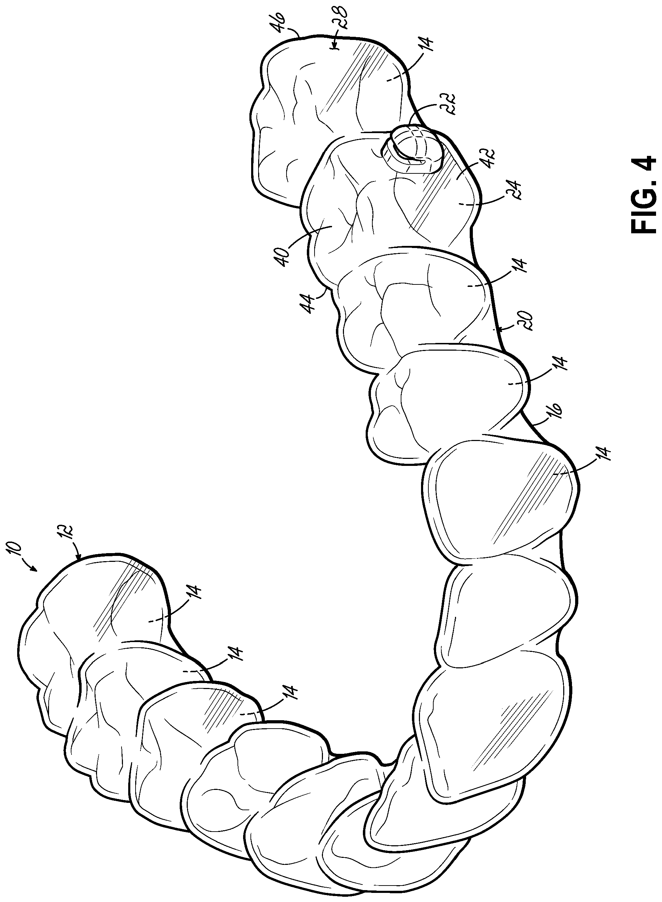

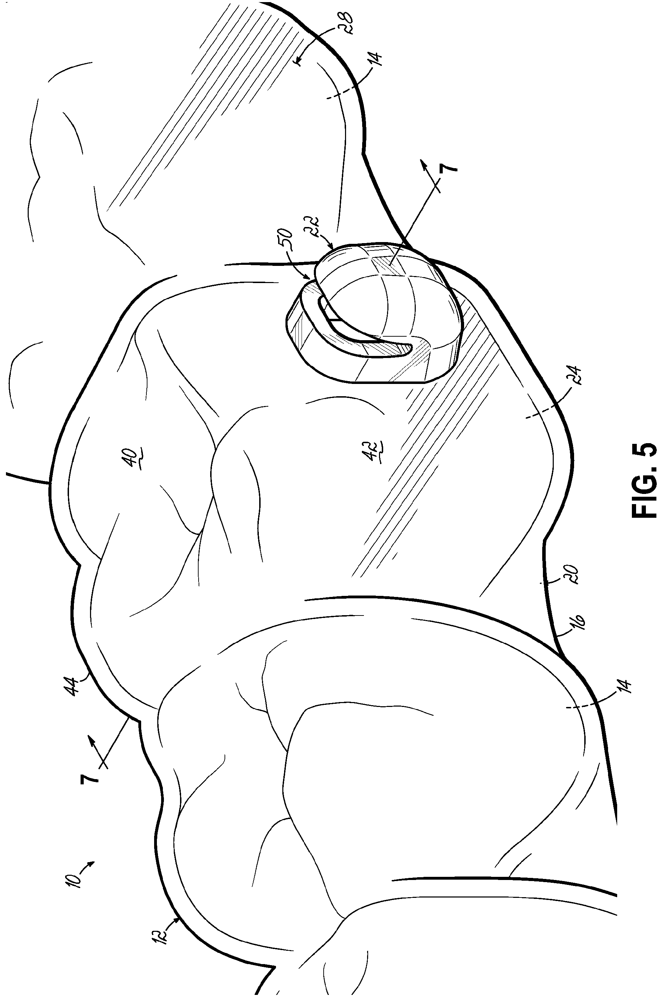

With reference to Figs. 4 and 5, to conform to the patient's teeth, the shell 12 has wall portions that are configured to conform to exposed surfaces of the patient's teeth. By way of example, the wall portions may be defined by an occlusal portion 40, a labial portion 42, and a lingual portion 44. The portions 40, 42, 44 are shown with respect to the cavity 24. The edge 16 defines a gingival portion of the shell 12. The portions 40, 42, and 44 of each cavity 14 generally conform to the corresponding portions of a respective one of the patient's teeth with the edge 16 corresponding to the gingival margin for the specific tooth 18. The shell 12 may also include distal portions 46 that encircle the cavities that receive the rear-most molar teeth.

As shown in Figs. 4 and 5, the integral hook 22 can be formed in the labial portion 42 of the shell 12. For the sake of clarity, the integral hook 22 will be described within the context of the depicted, non-limiting exemplary embodiment, which has a vertically-oriented integral hook 22 having a window 50 that opens to an occlusal surface of the integral hook 22. However, the integral hook 22 of the present disclosure need not be restricted to the depicted arrangement and can be otherwise arranged. For example, the integral hook 22 can be rotated about an axis orthogonal to the sidewall from which the integral hook 22 extends. Additionally or alternatively, the window 50 can be rotated about that same axis relative to the integral hook 22. Furthermore, the window 50 need not have a converging-wedge shape as depicted but can have a straight shape or a diverging-wedge shape (see, e.g., Figs. 7A-7D).

The exemplary integral hook 22 extends labially (outwardly) relative to the labial portion 42 of the shell 12. This produces a cavity or void space between the shell 12 and the corresponding tooth surface in the absence of the attachment 26. This cavity or void space is referred to herein as "an interior space 52," is shown in Figs. 7A-7D, and described below. As described herein, the integral hook 22 includes a window 50 that extends through the thickness of the shell 12. As an example, as is shown in Fig. 3, the window 50 may receive the elastic band 34. It will be appreciated that the window 50 may receive other orthodontic devices, such as telescoping arms or fixed-length arms often utilized in herbst-style appliances. In some variants, the system 32 can include a plurality of integral hooks 22 each of which hooks 22 may be formed in any single one or a combination of the portions 42, 44, and 46 and embodiments of the invention are not limited to the single integral hook 22 on the labial portion 42 as shown. For example, the integral hook 22 may be formed in the lingual portion 44 of the shell 12 and so extend lingually, outwardly away from the lingual portion 44.

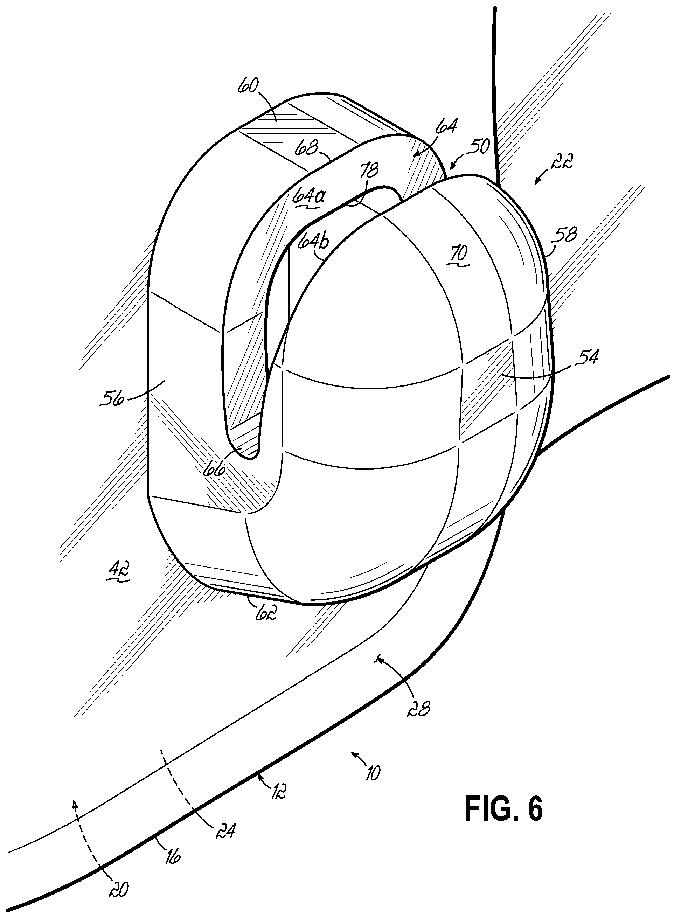

As shown in Figs. 5, 6, 7A, 7B, 7C, and 7D, the integral hook 22 has an outer wall 28 that is integral with the shell 12 and that defines a bubble-like configuration relative to the labial portion 42 of the shell 12. The outer wall 28 defines an interior space 52 (labeled in each of Figs. 7A-7D). In the exemplary embodiment, the interior space 52 is labially positioned relative to the corresponding tooth 18 (see, e.g., Fig. 3), and the interior space 52 can be accessed through a window 50 disposed on the outer wall 28. In this way, the cavity 24 of the shell 12 receives the tooth 30, and the interior space 52 of the integral hook 22 receives the attachment 26. In the absence of the attachment 26, the interior space 52 would be empty space (i.e., an empty bubble) adjacent the tooth 30. Generally, the integral hook 22 protrudes from the labial portion 42 of the shell 12. While having any configuration sufficient to advance orthodontic treatment, the exemplary embodiment is defined by a labial wall 54, a mesial wall 56, a distal wall 58, an occlusal wall 60, and a gingival wall 62. The walls 54, 56, 58, 60, and 62 are integral to the shell 12 and define the interior space 52. While terms labial, mesial, distal, occlusal, and gingival are used in the description of the figures, they are referenced only to differentiate one direction from another and are not limiting. For example, an integral hook on a lingual side of the aligner may have similar description but include a lingual wall rather than a labial wall. Further, the term "wall" in any of the labial wall, mesial wall, distal wall, occlusal wall, and gingival wall is not limited to a flat surface, i.e., a plane oriented or facing in a particular direction. For example, any single one or all the walls may be curved (i.e., having no flat regions) and/or be multifaceted (i.e., having many flats). And, while the integral hook 22 is shown oriented generally aligned orthogonally with respect to the portion 42 of the shell 12, the integral hook 22 may be rotated to other orientations with walls or portions of walls oriented in identified directions. As a specific example, the integral hook may be rotated 45° from that shown and so that the window opens in a mesial-occlusal or distal-occlusal direction. In those orientations, a wall or portion thereof would face in the labial (or lingual), mesial, distal, occlusal, and gingival directions.

In the exemplary embodiment shown, the window 50 is defined by a through-thickness surface or wall 64 that intersects or connects an outer surface 70 and an inner surface 78 of the integral hook 22. In the example shown in Fig. 7A, the opposing through wall portions 64a, 64b of the wall 64 trace a mouth-shaped configuration with a largest distance between opposing lingual 64a and labial portions 64b of the through wall 64 being at the occlusal wall 60. The mouth-shaped configuration is concave with respect to the labial portion 42. This largest distance defines a width of an opening 68 for the window 50 at the occlusal wall 60. Around the perimeter of the integral hook 22, the through wall 64 extends from the mesial wall 56 to the distal wall 58 over the occlusal wall 60. In essence, the through wall 64 is in three of four sides of the integral hook 22. The through wall 64 extends around each of the mesial wall 56 and the distal wall 58 toward the gingival wall 62 to a gingival-most end 66. A distance between opposing lingual and labial through-wall portions 64a, 64b gradually decreases toward each of the ends 66 of the through wall 64 along each wall 56, 58, respectively. In the example, there is one end 66 at one or both the mesial wall 56 and the distal wall 58. The ends 66 represent the furthest distance that the window 50 extends along the mesial wall 56 and along the distal wall 58. At each end 66, the lingual and labial wall portions 64a, 64b meet or merge. Although the ends 66 on each wall 56, 58 appear to be symmetrically positioned, embodiments of the invention are not limited to that configuration. The gradual narrowing of the distance between portions 64, 64b produces a wedge-shape. As shown, the opposing portions 64a, 64b of the through wall 64 may be non-planar and, in the example, have an arcuate shape.

The through wall 64 defines dimensions of the window 50. For example, a depth D1 of the window 50 is determined by one end 66 of the wall 64 at a location where the opposing portions 64a, 64b merge. The depth D1 being a perpendicular distance from a plane at the opening 68 to a plane at the end 66. In Fig. 7A, the planes are perpendicular to the page at each of these locations. The depth D1 of the window 50 may depend on dimensions of the attachment 26, described below. The depth D1 of the window 50 in Fig. 7A is roughly one-half the overall occlusal-gingival height H1 of the integral hook 22 at about a basepoint at the labial portion 42 of an overall labial-lingual projection P1 of the integral hook 22.

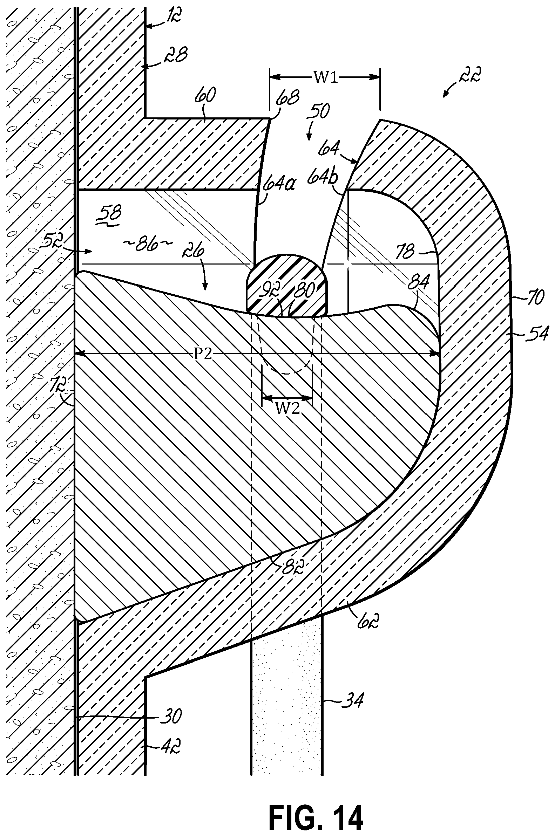

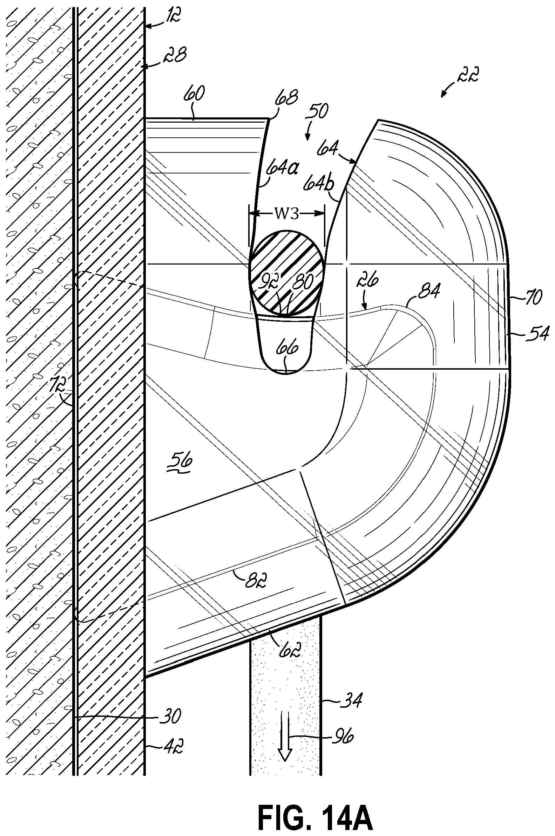

In the exemplary configuration, the opening 68 can be widest at the occlusal wall 60 and so the window 50 opens in an occlusal direction. Further, a distance between the opposing portions 64a, 64b determines width W1 at the occlusal wall 60 at the opening 68. A distance between the opposing portions 64a, 64b reduces to a width W2 near (e.g., within 2 mm to 3.5 mm) or at the end 66. In some arrangements, the width W1 can be greater than the width W2. In that way, the window 50 narrows in a gingival direction. That is, the window 50 can narrow in a direction away from the opening 68. In the depicted embodiment, a ratio of the width W1 to the width W2 is approximately 2:1. In some arrangements, the ratio of W1:W2 can be 0.5:1; 1:1; 4:1, or a ratio having a value between any of the aforementioned values. The dimensions of the width W1 and width W2 may depend on the dimension of the elastic band 34, as is described with reference to Figs. 14 and 14A. Although not shown, the window 50 may extend over any two or three walls 54, 56, 58, 60, and 62 and so may open in any single one of the mesial, distal, or gingival directions for receiving the elastic band 34.

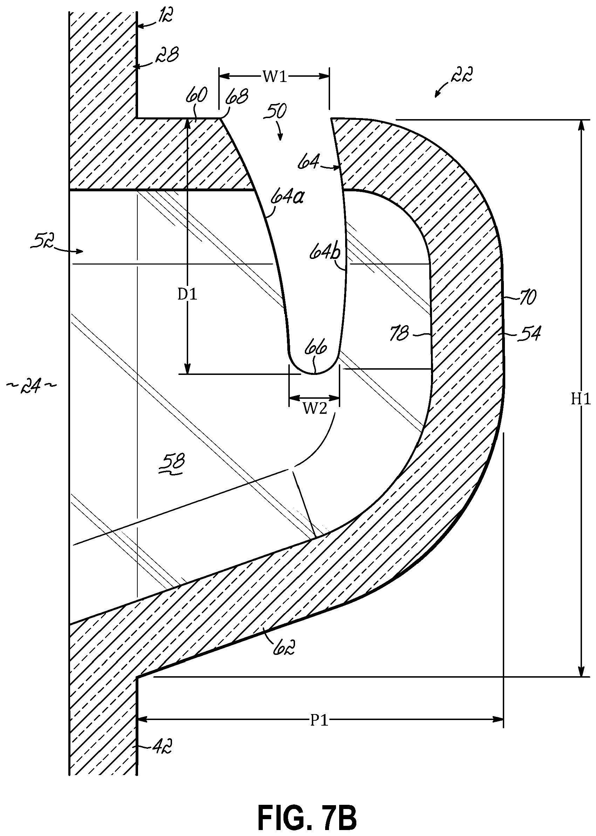

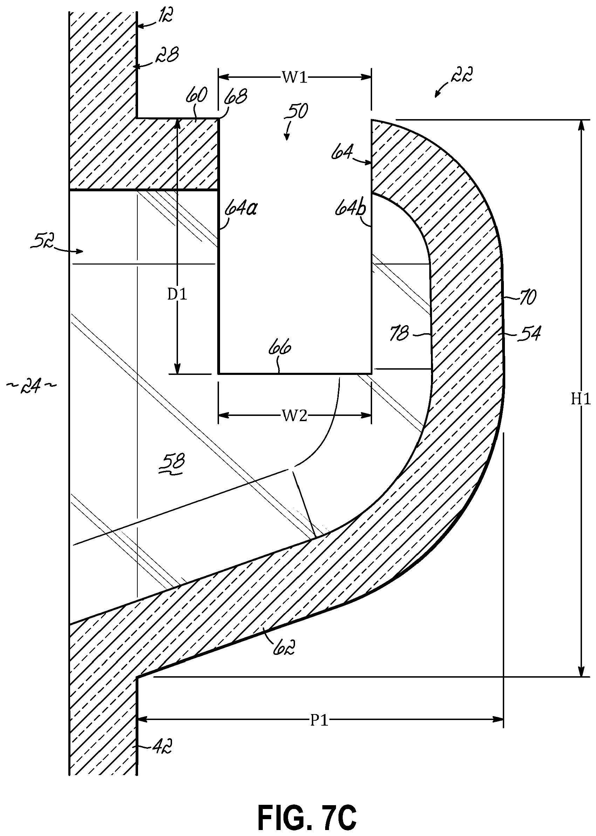

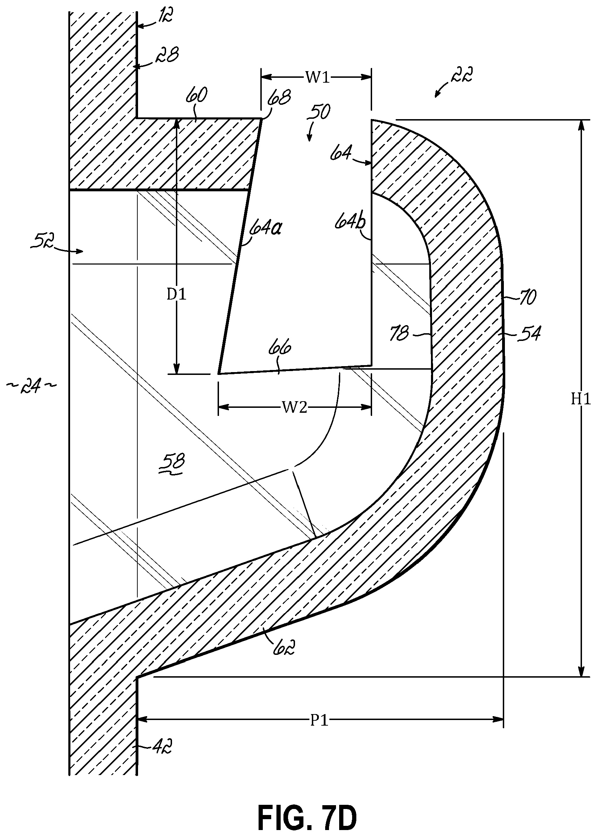

Alternative or additional non-limiting embodiments are depicted in Figs. 7B, 7C, and 7D in which like reference numerals refer to like features throughout the figures. In the example shown in Fig. 7B, the opposing through wall portions 64a, 64b of the wall 64 trace a mouth-shaped configuration with a largest distance between opposing lingual 64a and labial portions 64b of the through wall 64 being at the occlusal wall 60. The mouth-shaped configuration is convex with respect to the labial portion 42 and so is generally the opposite orientation of that shown in Fig. 7A. In the example shown in Fig. 7C, the opposing through wall portions 64a, 64b trace a rectangular-shaped configuration in which the opposing lingual portion 64a and labial portion 64b are generally parallel with the ends 66 being perpendicular to the parallel opposing portions 64a and 64b. The width between the opposing lingual portion 64a and labial portion 64b is constant from opening 68 to ends 66 with W1 equaling W2. In the example shown in Fig. 7D, the opposing through wall portions 64a, 64b trace an irregular polygon-shaped configuration in which the opposing lingual portion 64a and labial portion 64b are not parallel and with the ends 66 not being perpendicular to the opposing portions 64a and 64b. The width between the opposing lingual portion 64a and labial portion 64b increases from opening 68 to ends 66 with W1 being less than W2.

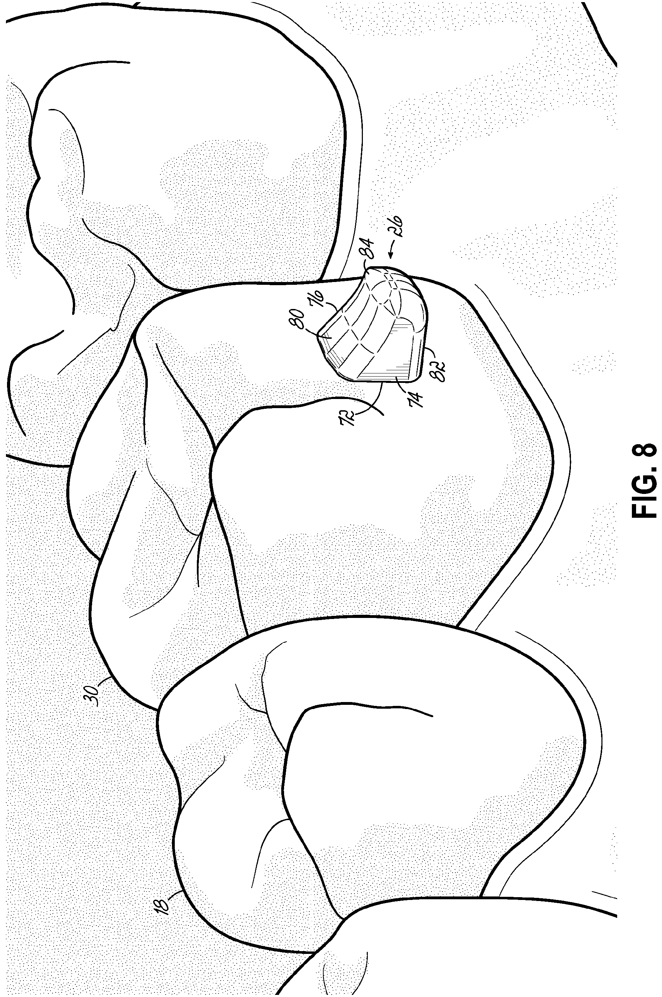

With reference to an exemplary embodiment shown in Figs. 8, 9, and 10, the attachment 26 can be attached to or formed on a labial surface of the patient's tooth 30 at a lingual side 72 of the attachment 26. Although not shown, attachment to the tooth 30 can be achieved during forming of the attachment 26 against the tooth surface. In that regard, and although not shown in the figures, the attachment 26 may be formed and placed on the patient's tooth, such as tooth 30 in Figs. 1 and 8 while the patient is at the clinician's office. A template aligner (TA) may be utilized for this dual purpose. The TA is similar to the aligner 10 but is usually more flexible and includes cavities at the locations where the attachment 26 is to be bonded to the tooth 30. The cavity is a negative replica of the attachment 26, that is, the cavity is the size and shape of the attachment 26 in the desired orientation on the patient's tooth. The clinician may fill the cavity with a composite and then place the TA on the patient's teeth. In this way, the attachment 26 is both formed and attached to the patient's tooth 30 at the correct location. Once the composite has set or cured, the TA is peeled off the patient's tooth leaving the attachment 26 bonded at the correct location. The TA may be made or printed in a similar manner as the aligner 10 described below.

Alternatively, a separately formed attachment 26 may be adhesively attached to the patient's tooth, such as, with Transbond XT (available from 3M); Transbond PLUS (available from 3M); Go-To Adhesive (available from Reliance); Grengloo & Blugloo (available from Ormco) in a layer between the lingual side 72 and the surface of the tooth 30. As is shown generally with reference to Figs. 2 and 3, the integral hook 22 receives the attachment 26 when the patient places the aligner 10 on their jaw.

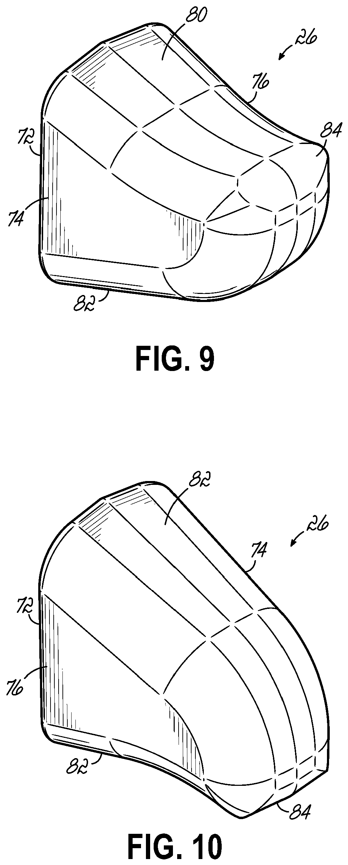

Recognizing that the attachment 26, like the integral hook 22, can be oriented differently than is shown for the non-limiting exemplary embodiments of Figs. 8, 9, and 10. Nonetheless, for the sake of clarity, features of the attachment 26 will now be described with reference to Figs. 8, 9, and 10, in which the attachment 26 has a mesial side 74, a distal side 76, an occlusal side 80, and a gingival side 82. The sides 74, 76, 80, and 82 face outwardly and may cooperate with one or more of the walls 56, 58, 60, 62, respectively, of the integral hook 22. During treatment, cooperation between the sides 74, 76, 80, and 82 of the attachment 26 and walls 56, 58, 60, and 62 of the integral hook 22 may produce orthodontic treatment forces on the tooth 30 and one or more surrounding teeth 18 according to the treatment plan. As shown in Figs. 9 and 10, the sides 74, 76, 80, and 82 produce a claw-like or hook-like shape with the occlusal side 80 having a concave, arcuate shape and the gingival side 82 having a convex, arcuate shape. The sides 80 and 82 intersect at a rounded tip 84 with the mesial side 74 and distal side 76, respectively, being generally parallel or at slightly intersecting angles relative to one another.

In the exemplary embodiment shown in Fig. 8, the attachment 26 is oriented so that the concave side 80 faces occlusally. The tip 84 therefore points in a generally labial-occlusal direction. The shape and orientation of the attachment 26 on the tooth 30 is not limited to the embodiment shown. For example, depending on the forces needed for treatment, the attachment 26 may be oriented with the concave side 80 facing any single one of a gingival direction (180° from that shown in Fig. 8), a mesial direction, or a distal direction.

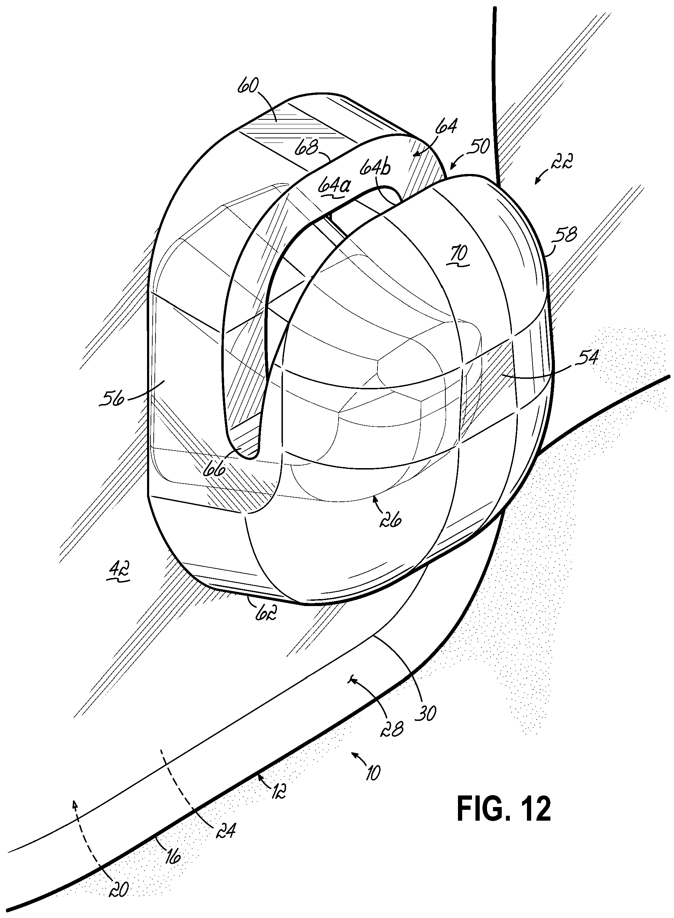

The fit of the attachment 26 within the integral hook 22 (without the elastic band 34) is shown in Figs. 12, 13, and 14, in which, the attachment 26 is received in the interior space 52 of the integral hook 22. In some variants, the attachment 26 does not fill the entirety of the interior space 52. Stated another way, in some arrangements a volume of the attachment 26 is less than a volume of the interior space 52. In some embodiments, the attachment 26 occupies all or nearly all of the interior space 52. With reference to the non-limiting exemplary embodiment depicted in Fig. 14, the relative fill volume of the attachment 26 can be from 25% to 75%, and by way of further example, from 45% to 75%. To that end, one or more of the sides 74, 76, 80, and 82 may not be in direct contact with the corresponding walls 56, 58, 60, and 62 of the integral hook 22. This leaves a portion of the interior space 52 unfilled. That is, there is a gap between one or more sides 74, 76, 80, and 82 of the attachment 26 and the corresponding walls 56, 58, 60, and 62 of the integral hook 22.

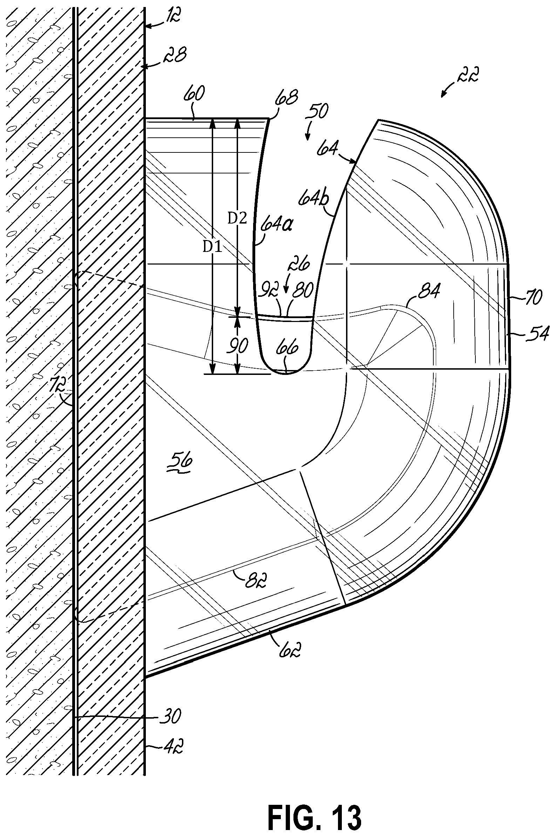

An example of this volume relationship is shown in Figs. 13 and 14. In one embodiment, the mesial side 74 and the distal side 76 of the attachment 26 may be in direct contact with the corresponding walls 56 and 58 of the integral hook 22. So, there may be little, if any, relative movement between the aligner 10 and the attachment 26 in the mesial/distal directions. The gingival side 82 of the attachment 26 may conform to the gingival wall 62. A labial-lingual projection P2 of the attachment 26 may fill the interior space 52 in a labial-lingual direction. A gap may therefore exist primarily between the occlusal side 80 of the attachment 26 and the occlusal wall 60 of the integral hook 22.

With continued reference to Figs. 13 and 14, because the window 50 is in the occlusal wall 60 and the gap or an unfilled portion 86 of the interior space 52 between the attachment 26 and the integral hook 22 is an occlusal portion of the interior space 52, the unfilled portion 86 is open to the window 50. In one embodiment, this results in the occlusal side 80 of the attachment 26 being exposed in the window 50. Stated in another way, D1 (Fig. 13), which is the depth of the window 50 to end 66 along the mesial wall 56 from the opening 68 in the occlusal wall 60, is greater than a depth D2 from the opening 68 in the occlusal wall 60 to the occlusal side 80 of the attachment 26. As such, the attachment 26 has an exposed occlusal-gingival portion 90 when viewed in the direction of the mesial wall 56. The exposed portion 90 extends occlusally relative to the end 66 and toward the opening 68. A portion 92 of the occlusal side 80 is therefore exposed in the window 50.

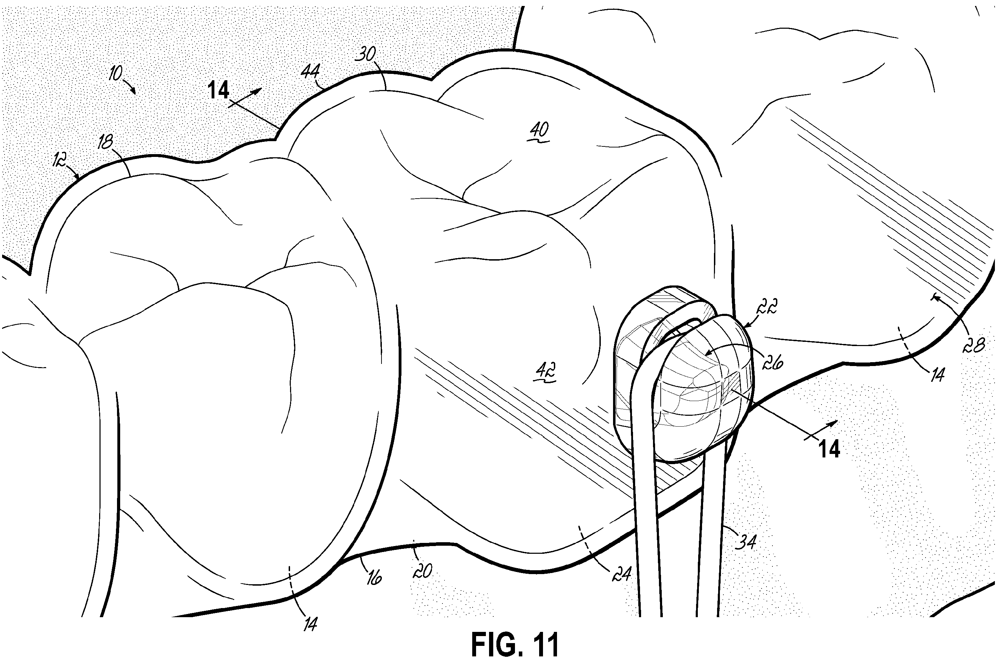

Cooperation between the integral hook 22 and the attachment 26 together with the elastic band 34 is shown in Figs. 11, 14, and 14A. In the exemplary embodiment of the system 32, the attachment 26 does not fill the entirety of the interior space 52 and the elastic band 34 is received in the window 50 to contact the attachment 26 on the concave side 80. This arrangement is achieved by the relative fit of the attachment 26 in the interior space 52 of the integral hook 22 and the dimensions of the window 50, described above.

In Figs. 14 and 14A, the elastic band 34 is shown inserted in the window 50 and into contact with the exposed portion 92 of the occlusal side 80 of the attachment 26. In the exemplary embodiment, the relative dimensions of the window 50 between opposing through wall portions 64 and the diameter of the elastic band 34 create an interference fit between the band 34 and the integral hook 22 prior to the elastic band 34 being seated against the exposed portion 92 of the occlusal side 80 of the attachment 26. In alternative configurations, the dimensions of the window 50 may prevent the elastic band 34 from being seated on the exposed portion 92 or the dimensions of the window 50 may not interfere with contact between the elastic band 34 and the exposed portion 92.

In the exemplary embodiment, the elastic band 34 contacts each of the integral hook 22 at opposing wall portions 64a, 64b and the exposed portion 92. The relative dimension may therefore include a width W1 at the opening of the window 50 that is greater than the cross-sectional dimension of the elastic band 34. As a result, during insertion of the elastic band 34 into the window 50, the elastic band 34 may therefore be inserted into the window 50 without force. However, the side-to-side dimension of the window 50 (i.e., between opposing through wall portions 64) narrows to width W2 in a direction toward the ends 66. At some point near where the elastic band 34 contacts the exposed portion 92 of the occlusal side 80, the width dimension, such as at width W3 in Fig. 14A, between opposing through wall portions 64a, 64b equals an unstretched cross-sectional dimension of the elastic band 34. Further insertion of the elastic band 34 toward a seated position against the occlusal side 80 of the attachment 26 thus requires force to overcome the interference fit between the elastic band 34 and the integral hook 22.

At the point of insertion where the dimensions of the window 50 equal the dimensions of the elastic band 34, such as at W3 in Fig. 14A, the band 34 may be stretched in the direction of arrow 96, that is, directly away from the opening of the window 50. The stretching force overcomes the interference between the integral hook 22 and the elastic band 34 and so the band 34 is seated against the exposed portion 92 of the attachment 26. When the elastic band 34 is seated on the exposed portion 92 of the attachment 26, the elastic band 34 may not contact either of the ends 66. Although not limited by theory, during stretching, the cross-sectional dimension of the elastic band 34 may be reduced to a dimension that permits the elastic band 34 to slide between the opposing through wall portions 64a, 64b and into contact with the exposed portion 92. Once seated, the elastic band 34 in the absence of the force 96 may remain deformed. As an example of deformation of the elastic band 34 in that position, the elastic band 34 is shown deformed from a circular cross section to an oval cross section in Fig. 14A once seated against the exposed portion 92. There may be localized deformation between the elastic band 34 and the integral hook 22 at the areas of contact between the two in the seated position. By way of example, the width dimensions of the window 50 may increase as the elastic band 34 is forcibly wedged further into the window 50. As such, once the force in the direction of arrow 96 is removed from the elastic band 34 after the band 34 is seated, the band 34 and/or the integral hook 22 may remain partly elastically deformed. This is schematically shown in Fig. 14A. Elastic deformation of the integral hook 22 may be significant or the only deformation if a rigid orthodontic appliance is inserted into the window. For example, if a metal ring (not shown) is inserted into the window 50, the integral hook 22 may be deformed, which may hold the ring in position in the window 50 and against the attachment 26. In either case, residual elastic deformation may create a grip on the elastic band 34/metal ring that resists unintentional removal of the elastic band 34/ring from the window 50. With the elastic band 34, once it is in a seated position, it may be held in position by the elastic deformation of the band 34 and/or the integral hook 22. The elastic band 34 may be removed only by an applied force in the opposing direction from arrow 96. However, in alternative configurations, the window 50 can be sized larger than the cross-sectional area of the unstressed elastic band 34 such that the elastic band 34 does not deform the outer wall 23 of the integral hook 22 when the elastic band 34 is seated on the attachment 26.

With reference to Figs. 3, 14, and 14A, during treatment with the elastic band 34 applying a force, a majority of the force from the elastic band 34 can be transferred to the attachment 26 and consequently to the tooth 30. By way of example, at least 70% of the force from the elastic band 34 is transferred to the tooth 30 due to the seated position of the elastic band 34 on the attachment 26. A minority of the force from the elastic band 34 can be transferred to the integral hook 22. In particular, forces from the elastic band 34 may be transferred to the integral hook 22 indirectly through the attachment 26 via one or more of the cooperating walls 56, 58, and 62 of the integral hook 22 and one or more of the corresponding sides 74, 76, and 82 of the attachment 26. By way of example, at most 30% of the force from the elastic band 34 can be transferred indirectly to the integral hook 22 via the attachment 26. Advantageously, the attachment 26 helps stabilize the integral hook 22 so that forces indirectly from the elastic band 34 do not displace the aligner 10. That is, it becomes possible to apply force to the aligner 10 via the attachment 26 without the entirety of the applied force from the elastic band 34 being carried solely by the aligner 10.

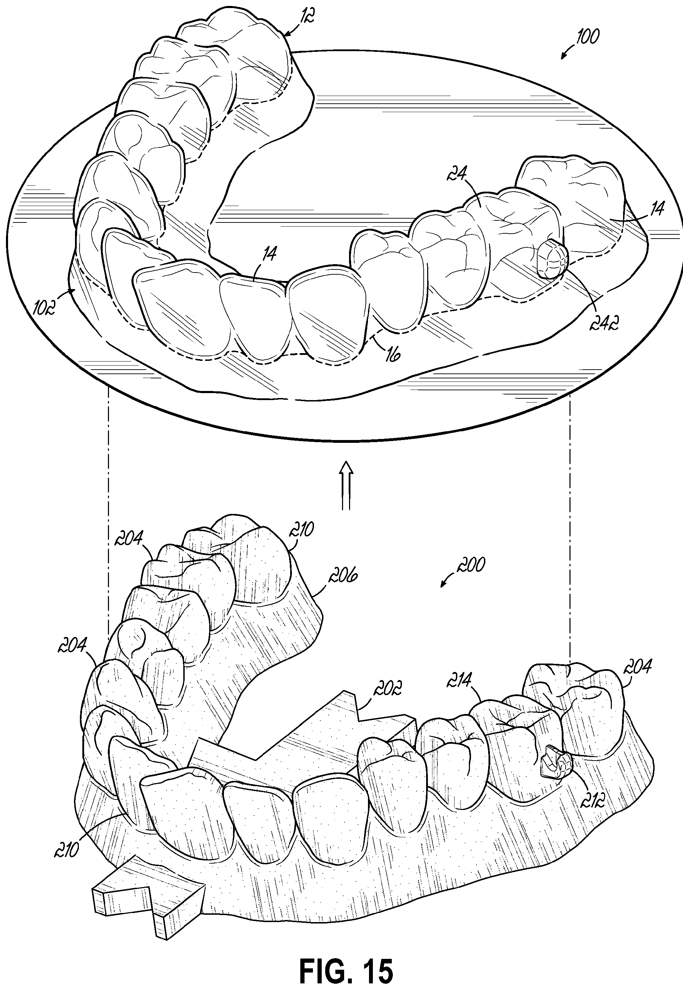

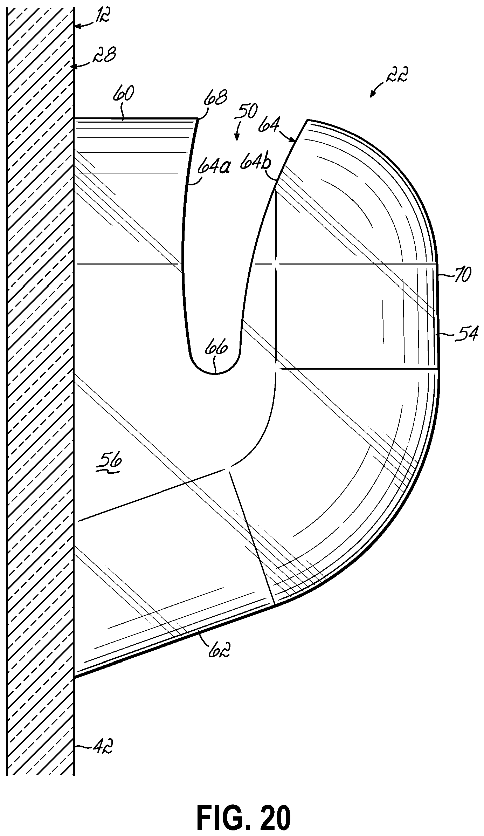

With reference now to Figs. 15-20, according to one aspect of the invention, the aligner 10 is manufactured. To that end, a clinician may opt to design the integral hook 22 in the shell 12 adjacent any single cavity 14, on multiple separate cavities 14, or multiple integral hooks 22 adjacent a single cavity of any single one of the aligners 10 forming part of an orthodontic treatment planning process. As described herein, a clinician may be a person who is not the patient and may be trained to design aligners to implement an orthodontic treatment plan as provided by a clinician. The clinician may therefore be a designer or could alternatively be the patient's doctor or other person who reports to the doctor. Reference to clinician and/or doctor herein is not limiting to embodiments of the invention.

With reference to Figs. 15-20, as an example, the clinician may design an integral hook 22 for one or more cavities 14 of the aligner 10 during one portion of the orthodontic treatment and then add a different integral hook 22 to one or more different cavities 14 of a different aligner 10 during another portion of the orthodontic treatment. These modifications occur during designing of the treatment plan and prior to manufacturing the aligners. Further, although one integral hook 22 is described and shown with respect to one aligner 10 (see, e.g., Figs. 1 and 15), multiple integral hooks 22 may be formed on a single aligner or on multiple aligners according to any single orthodontic treatment plan. Thus, the clinician may develop a treatment plan utilizing aligners 10 having a plurality of integral hooks 22 that change in orientation and in location from aligner to aligner during treatment. Embodiments of the invention are not limited to a single aligner with a single structure as is shown in the figures.

To that end, according to one aspect of the invention, a clinician may selectively locate and configure one or more integral hooks 22 on one or more aligners during orthodontic treatment planning. As is described below, the clinician may model virtual integral hooks prior to having an aligner manufactured. A computer model used to manufacture molds from which an aligner having one or more integral hooks may be formed. The computer model is based on the patient's initial dentition. By way of example, the orthodontist may obtain an impression of the patient's dentition using a suitable impression material. This impression may then be scanned into a computer using a three-dimensional scanning device to generate a three-dimensional computer model of the patient's initial dentition. The three-dimensional scanning device may also be used to obtain the computer model by directly scanning the patient's dentition.

The computer model of the initial dentition may be used by the orthodontist as a starting point to generate a target dentition model and one or more intermediate dentition models. The target dentition model may represent a desired positioning of the patient's teeth at the conclusion of orthodontic treatment. Thus, during an orthodontic treatment planning process, a series of computer models that provides incremental steps from the initial dentition to the one or more intermediate dentition models and ending with the target dentition is generated. Once the computer dentition models have been generated, one or more molds 200 may be fabricated from the virtual models using additive manufacturing (e.g., a 3-D manufacturing technique), CNC machining, a combination of these, or any other suitable method.

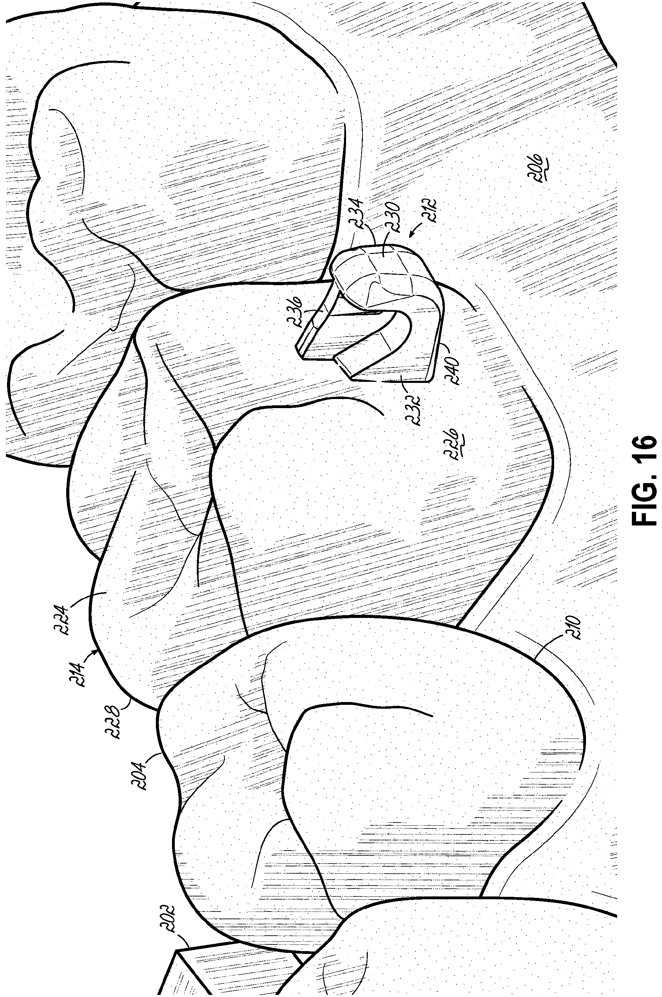

With reference to Fig. 15, once the molds 200 are manufactured, aligners are formed from a respective mold. Following mold manufacturing, a workpiece 100 is deformed over the mold 200. Although not shown, the mold 200 may be one of a series of molds each fabricated based on a corresponding computer model of the patient's dentition and each mold capturing a target orientation of the patient's teeth during orthodontic treatment. The mold 200 may include a base 202 that supports a plurality of projections 204 in the form of model teeth that extend from a model gum 206 (i.e., gingiva) and defines a gingival margin 210. As such, each model tooth 204 may have an orientation that produces a corresponding cavity 14 in the dental aligner 10 with the gingival margin 210 ideally providing a limiting boundary for a location of the edge 16 of the aligner 10. In accordance with an exemplary embodiment, the mold 200 includes a hook mold 212 on a model tooth 214, shown in Figs. 15 and 16. The hook mold 212 is spaced apart occlusally from the gingival margin 210.

Although not shown, the forming process causes the workpiece 100 to deform with each of the model teeth 204 producing the corresponding cavity 14 in the aligner 10. The deformed region 102 includes the integral hook 22 and is established by features of the mold 200 including the hook mold 212 on a model tooth 214. The hook mold 212 is configured to form at least a portion of the integral hook 22 during deformation of the workpiece 100. In this way, the hook 22 is integrated into the workpiece 100 as it is deformed and at a location distant from the patient's gingival margin 210. In other words, the integral hook 22 is not an additional structural component that is adhered to the shell 12 following forming.

With reference to Fig. 16, in one embodiment, the mold molar 214 defines an occlusal surface 224, a labial surface 226, and a lingual surface 228 to which the occlusal portion 40, the labial portion 42, and the lingual portion 44 of the cavity 24 (shown in Fig. 1) conform during deforming of the workpiece 100. As shown, the hook mold 212 projects labially from the labial surface 226 of the molded molar 214. The hook mold 212 has a labial side 230, a mesial side 232, a distal side 234, an occlusal side 236, and a gingival side 240. The sides 230, 232, 234, 236, and 240 generally form the walls 54, 56, 58, 60, and 62 of the integral hook 22 during deforming. That is, during deforming, the shell 12 is heated and is deformed onto and around surfaces of the molar 214 and so conforms to one or more portions of the sides 230, 232, 234, 236, and 240. However, in the embodiment shown, the window 50 (shown for example in Fig. 12) of the integral hook 22 is not as-formed. In that regard, a preformed hook 242 is formed around the mold hook 212 in the deformed region 102. As shown, the preformed hook 242 (Fig. 15) is a projection that has a bubble-like configuration and projects outwardly relative to the shell 12 that forms cavity 14. The preformed hook 242 lacks the window 50.

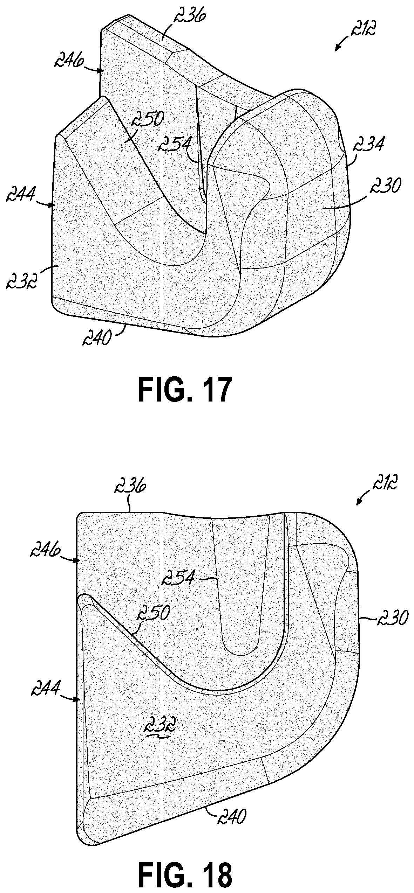

With regard to the exemplary features of the mold hook 212, although the integral hook 22 is designed to receive the attachment 26, shown, for example, in Fig. 1, the attachment 26 and the hook mold 212 are not identical in shape or in size in accordance with one embodiment. With reference to Figs. 16 and 17, the hook mold 212 extends outwardly from the labial surface 226 of the model tooth 214. In the exemplary embodiment, a main body portion 244 of the hook mold 212 is generally shaped similar to corresponding sides of attachment 26. For example, sides 232, 234, 240, and 230 of the main body portion 244 generally replicate the position and orientation of the sides 74, 76, 82, and 84 of the attachment 26 shown in Figs. 9 and 10. Thus, during forming of the workpiece 100 the side 232 positions the wall 56 of the integral hook 22 in the deformed region 102. Similarly, the side 234 positions the wall 58 of the integral hook 22, and the side 240 positions the side 62 in the deformed region 102. The remainder of the integral hook 22, that is, the occlusal wall 60 is formed by the occlusal side 236 of the hook mold 212.

With reference to Figs. 17 and 18, a mold fin portion 246 extends away from the main body portion 244. In the exemplary embodiment, the mold fin portion 246 extends occlusally. In that regard, the mold fin portion 246 defines occlusal side 236 of the hook mold 212. The mold fin portion 246 is narrower than the main body portion 244 and is generally centered with respect to the main body portion 244 so that the hook mold 212 is symmetrical along a plane that divides the mold fin portion 246 along a labial-lingual direction. By way of example, the mold fin portion 246 can be between 5% and 25% of a total width of the main body portion 244. A chamfer 250 extends from the mold fin portion 246 to the side 232. Although not shown, a similar chamfer extends between the mold fin portion 246 and the distal side 234. The chamfers 250 may be arcuate and slightly angled and so point outwardly in mesial-occlusal and distal-occlusal directions. The chamfer 250 facilitates ejection of the deformed region from the hook mold 212 after forming. In some variants, the chamfers 250 can form a marking indica in the workpiece to indicate where the workpiece should be cut to form, for example, the window 50. In some arrangements, the mold fin portion 246 includes a U-shaped relief area or projection 254.

During deforming of the workpiece 100, the mold fin portion 246 forms the occlusal wall 60 of the integral hook 22 and the relief area or projection 254 forms a cut pattern 256 (shown in phantom line). In particular, the mold fin portion 246 forms all or a portion of the unfilled portion 86 defined between the attachment 26 and the integral hook 22 when the attachment 26 is inserted into the hook 22. Advantageously, during deforming, the mold fin portion 246 controls defect formation on the occlusal wall 60 of the integral hook 22. For example, the mold fin portion 246 reduces or eliminates web formation at a transition of the deformed region 102 between the labial potion 42 and the occlusal wall 60. For this reason, the location of the occlusal wall 60 and the projection/relief region 254 is more consistent in terms of size, shape, and orientation.

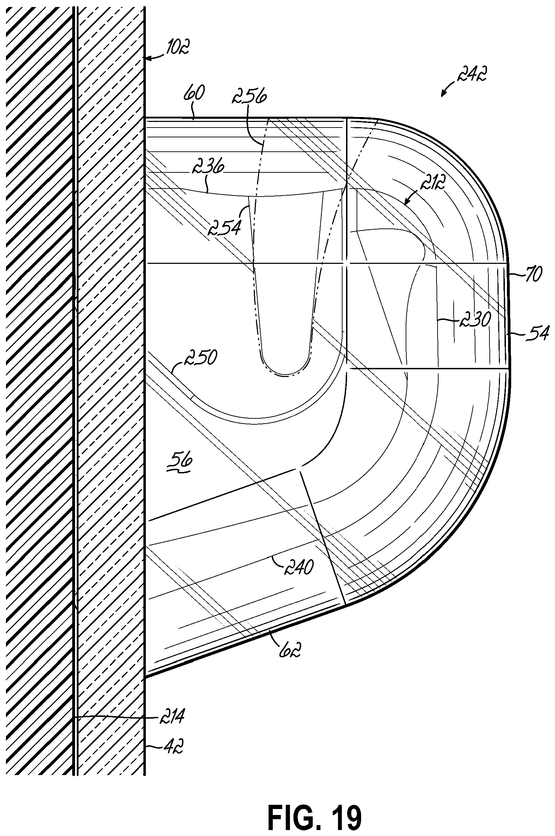

During removal of the deformed region 102 from the mold 200 as is shown in Fig. 15, the hook mold 212 is removed from preformed hook 242. The hook mold 212 may break away from the mold 200 during removal. The preformed hook 242 is shown in Fig. 19 following molding on the hook mold 212. As shown, following forming, the preformed hook 242 lacks a window. Thus, following mold removal, the window 50 is cut from the preformed hook 242 along the cut pattern 256. In one embodiment, the window 50 is cut according cut pattern 256 transferred from the projection/relief region 254. By way of example, the window 50 may be cut by hand with a punch tool or by a machining operation.

## Claims

1. A system for orthodontic treatment comprising:
an orthodontic aligner (10) for orthodontic treatment of a patient's teeth, the orthodontic aligner comprising:
a shell (12) that defines at least one tooth cavity (14) configured to receive at least one of the patient's teeth and an edge (16) that defines an opening (20) through which the at least one tooth cavity (14) receives the at least one of the patient's teeth (18),
wherein the shell (12) has wall portions and an integral hook (22) extends outwardly from one of the wall portions adjacent the at least one tooth cavity (14) and is spaced occlusally apart from the edge, and
wherein the integral hook (22) has a side wall (28) that defines an interior space (52) and a window (50), the interior space (52) opens to the at least one tooth cavity (24), and the window (50) extends through the side wall (23, 28) so that the interior space (52) is accessible through the window (50), and
an attachment (26) configured to be secured to the patient's tooth (18),
wherein the integral hook (22) is configured to receive the attachment (26) when the orthodontic aligner (10) is placed on the at least one of the patient's teeth (18), the attachment (26) being accessible through the window (50).

2. The system of claim 1, wherein the side wall (23, 28) of the integral hook (22) includes a mesial wall (56), a distal wall (58), an occlusal wall (60), and a gingival wall (62), and the window (50) extends along at least any two walls.

3. The system of claim 1 or claim 2, wherein the side wall (23, 28) of the integral hook (22) includes a mesial wall (56), a distal wall (58), an occlusal wall (60), and a gingival wall (62), and the window (50) extends along any three walls.

4. The system of any of claims 1 to 3, wherein the window (50) opens in one of an occlusal direction, a gingival direction, a mesial direction, or a distal direction when the orthodontic aligner (10) is positioned on the patient's teeth (18).

5. The system of any preceding claim, wherein the window (50) is a wedge shape.

6. The system of any preceding claim, wherein at least a portion of the window (50) is sized to interfere with insertion of an elastic band (34).

7. The system of any preceding claim, wherein the window (50) includes a through wall (64) that intersects an outer surface (70) and an inner surface (78) of the side wall (23,28) of the integral hook (22) and the through wall (64) has opposing portions that define a first width at an opening of the window (50) and that define a second width near an end of the opposing portions of the through wall (64), the first width being greater than the second width.

8. The system of claim 7, wherein the first width is greater than a diameter of an elastic band (34) so that the opening is configured to receive the elastic band (34) and the second width is less than the diameter of the elastic band (34) so that there is an interference fit between the elastic band (34) and the window (50) at the second width.

9. The system of any preceding claim, wherein the attachment (26) does not fill the interior space (52) of the integral hook (22).

10. The system of any preceding claim, wherein the attachment (26) fills more than 35% and 75% or less of the interior space (52) of the integral hook (22).

11. The system of any preceding claim, wherein the attachment (26) does not fill the interior space (52) of the integral hook (22) so that an unfilled portion of the interior space (52) between the attachment (26) and the side wall (23,28) of the integral hook (22) is accessible through the window (50).

12. The system of any preceding claim when dependent on claim 7, wherein a depth of the window (50) from the opening to the end of the opposing portions of the through wall (64) is greater than a distance measured from the opening to a surface of the attachment (26) when the orthodontic aligner (10) is placed on the patient's teeth (18).

13. The system of any preceding claim, further comprising:
an elastic band (34),
wherein the elastic band (34) is insertable into the window (50) to contact the attachment (26), and after insertion, the elastic band (34) is held in place in the window (50) by the integral hook (22).

14. A method of manufacturing the system of any preceding claim comprising:
providing the attachment (26) configured to be secured to the patient's tooth (18);
manufacturing the orthodontic aligner (10) by preparing a mold (200) including one or more projections (204) in a configuration of one or more of the patient's teeth (18) and a hook mold (212) extending outwardly from the one or more projections (204);
deforming a workpiece (100) over the mold (200) including over the hook mold (212) to create a deformed region (102) of the workpiece (100) including a preformed hook (22); and
removing a portion of the preformed hook (22) to form the window (50).

## Patentansprüche

1. System zur orthodontischen Behandlung, umfassend:
einen orthodontischen Aligner (10) zur orthodontischen Behandlung der Zähne eines Patienten, wobei der orthodontische Aligner Folgendes umfasst:
eine Hülle (12), die mindestens eine Zahnkavität (14) definiert, die dazu konfiguriert ist, mindestens einen der Zähne des Patienten aufzunehmen, und eine Kante (16), die eine Öffnung (20) definiert, durch die die mindestens eine Zahnkavität (14) den mindestens einen der Zähne (18) des Patienten aufnimmt,
wobei die Hülle (12) Wandabschnitte aufweist und sich ein integraler Haken (22) von einem der Wandabschnitte neben der mindestens einen Zahnkavität (14) nach außen erstreckt und okklusal von der Kante beabstandet ist, und
wobei der integrale Haken (22) eine Seitenwand (28) aufweist, die einen Innenraum (52) und ein Fenster (50) definiert, sich der Innenraum (52) zu der mindestens einen Zahnkavität (24) öffnet und sich das Fenster (50) durch die Seitenwand (23, 28) erstreckt, sodass der Innenraum (52) durch das Fenster (50) zugänglich ist, und
eine Befestigung (26), die dazu konfiguriert ist, an dem Zahn (18) des Patienten gesichert zu werden,
wobei der integrale Haken (22) dazu konfiguriert ist, die Befestigung (26) aufzunehmen, wenn der orthodontische Aligner (10) auf dem mindestens einen der Zähne (18) des Patienten platziert wird, wobei die Befestigung (26) durch das Fenster (50) zugänglich ist.

2. System nach Anspruch 1, wobei die Seitenwand (23, 28) des integralen Hakens (22) eine mesiale Wand (56), eine distale Wand (58), eine okklusale Wand (60) und eine gingivale Wand (62) beinhaltet und sich das Fenster (50) mindestens zwei beliebige Wände entlang erstreckt.

3. System nach Anspruch 1 oder Anspruch 2, wobei die Seitenwand (23, 28) des integralen Hakens (22) eine mesiale Wand (56), eine distale Wand (58), eine okklusale Wand (60) und eine gingivale Wand (62) beinhaltet und sich das Fenster (50) drei beliebige Wände entlang erstreckt.

4. System nach einem der Ansprüche 1 bis 3, wobei sich das Fenster (50) in einer von einer okklusalen Richtung, einer gingivalen Richtung, einer mesialen Richtung oder einer distalen Richtung öffnet, wenn der orthodontische Aligner (10) auf den Zähnen (18) des Patienten positioniert ist.

5. System nach einem vorhergehenden Anspruch, wobei das Fenster (50) eine Keilform ist.

6. System nach einem vorhergehenden Anspruch, wobei mindestens ein Abschnitt des Fensters (50) bemaßt ist, um Insertion eines elastischen Bands (34) zu beeinflussen.

7. System nach einem vorhergehenden Anspruch, wobei das Fenster (50) eine durchgehende Wand (64) beinhaltet, die eine Außenfläche (70) und eine Innenfläche (78) der Seitenwand (23,28) des integralen Hakens (22) schneidet, und die durchgehende Wand (64) gegenüberliegende Abschnitte aufweist, die eine erste Breite an einer Öffnung des Fensters (50) definieren und die eine zweite Breite nahe einem Ende der gegenüberliegenden Abschnitte der durchgehenden Wand (64) definieren, wobei die erste Breite größer als die zweite Breite ist.

8. System nach Anspruch 7, wobei die erste Breite größer als ein Durchmesser eines elastischen Bands (34) ist, sodass die Öffnung dazu konfiguriert ist, das elastische Band (34) aufzunehmen, und die zweite Breite weniger als der Durchmesser des elastischen Bands (34) ist, sodass eine Presspassung zwischen dem elastischen Band (34) und dem Fenster (50) an der zweiten Breite besteht.

9. System nach einem vorhergehenden Anspruch, wobei die Befestigung (26) den Innenraum (52) des integralen Hakens (22) nicht füllt.

10. System nach einem vorhergehenden Anspruch, wobei die Befestigung (26) mehr als 35 % und 75 % oder weniger des Innenraums (52) des integralen Hakens (22) füllt.

11. System nach einem vorhergehenden Anspruch, wobei die Befestigung (26) den Innenraum (52) des integralen Hakens (22) nicht füllt, sodass ein ungefüllter Abschnitt des Innenraums (52) zwischen der Befestigung (26) und der Seitenwand (23,28) des integralen Hakens (22) durch das Fenster (50) zugänglich ist.

12. System nach einem vorhergehenden Anspruch, wenn abhängig von Anspruch 7, wobei eine Tiefe des Fensters (50) von der Öffnung zu dem Ende der gegenüberliegenden Abschnitte der durchgehenden Wand (64) größer als ein Abstand ist, der von der Öffnung zu einer Oberfläche der Befestigung (26) gemessen wird, wenn der orthodontische Aligner (10) auf den Zähnen (18) des Patienten platziert wird.

13. System nach einem vorhergehenden Anspruch, ferner umfassend:
ein elastisches Band (34),
wobei das elastische Band (34) in das Fenster (50) inserierbar ist, um die Befestigung (26) zu berühren, und das elastische Band (34) nach Insertion von dem integralen Haken (22) in dem Fenster (50) an Ort und Stelle gehalten wird.

14. Verfahren zur Herstellung des Systems nach einem vorhergehenden Anspruch, umfassend:
Bereitstellen der Befestigung (26), die dazu konfiguriert ist, an dem Zahn (18) des Patienten gesichert zu werden;
Herstellen des orthodontischen Aligners (10) durch Anfertigen einer Form (200), die einen oder mehrere Vorsprünge (204) in einer Konfiguration eines oder mehrerer der Zähne (18) des Patienten und eine Hakenform (212), die sich von dem einen oder den mehreren Vorsprüngen (204) nach außen erstreckt, beinhaltet;
Verformen eines Werkstücks (100) über der Form (200), beinhaltend über der Hakenform (212), um einen verformten Bereich (102) des Werkstücks (100) einschließlich eines vorgeformten Hakens (22) zu erzeugen; und
Entfernen eines Abschnitts des vorgeformten Hakens (22), um das Fenster (50) zu bilden.

## Revendications

1. Système permettant le traitement orthodontique comprenant :
un aligneur orthodontique (10) destiné au traitement orthodontique des dents d'un patient, l'aligneur orthodontique comprenant :
une coque (12) qui définit au moins une cavité dentaire (14) conçue pour recevoir au moins une des dents du patient et un bord (16) qui définit une ouverture (20) par laquelle ladite au moins une cavité dentaire (14) reçoit ladite au moins une des dents (18) du patient,
ladite coque (12) comportant des parties de paroi et un crochet intégré (22) s'étendant vers l'extérieur à partir de l'une des parties de paroi adjacente à ladite au moins une cavité dentaire (14) et étant espacée de manière occlusale du bord, et
ledit crochet intégré (22) possédant une paroi latérale (28) qui définit un espace interne (52) et une fenêtre (50), ledit espace interne (52) s'ouvrant sur ladite au moins une cavité de dent (24), et ladite fenêtre (50) s'étendant à travers la paroi latérale (23, 28) de sorte que l'espace interne (52) soit accessible par la fenêtre (50), et
une fixation (26) conçue pour être fixée à la dent (18) du patient,
ledit crochet intégré (22) étant conçu pour recevoir la fixation (26) lorsque l'aligneur orthodontique (10) est placé sur ladite au moins une des dents (18) du patient, ladite fixation (26) étant accessible par la fenêtre (50).

2. Système selon la revendication 1, ladite paroi latérale (23, 28) du crochet intégré (22) comprenant une paroi mésiale (56), une paroi distale (58), une paroi occlusale (60) et une paroi gingivale (62), et ladite fenêtre (50) s'étendant le long d'au moins deux parois quelconques.

3. Système selon la revendication 1 ou la revendication 2, ladite paroi latérale (23, 28) du crochet intégré (22) comprenant une paroi mésiale (56), une paroi distale (58), une paroi occlusale (60) et une paroi gingivale (62), et ladite fenêtre (50) s'étendant le long de trois parois quelconques.

4. Système selon l'une quelconque des revendications 1 à 3, ladite fenêtre (50) s'ouvrant dans une direction parmi une direction occlusale, une direction gingivale, une direction mésiale ou une direction distale lorsque l'aligneur orthodontique (10) est positionné sur les dents (18) du patient.

5. Système selon l'une quelconque des revendications précédentes, ladite fenêtre (50) présentant une forme de coin.

6. Système selon l'une quelconque des revendications précédentes, au moins une partie de la fenêtre (50) étant dimensionnée de manière à interférer avec l'insertion d'une bande élastique (34).

7. Système selon l'une quelconque des revendications précédentes, ladite fenêtre (50) comprenant une paroi traversante (64) qui coupe une surface externe (70) et une surface interne (78) de la paroi latérale (23, 28) du crochet intégré (22) et ladite paroi traversante (64) possédant des parties opposées qui définissent une première largeur au niveau d'une ouverture de ladite fenêtre (50) et qui définissent une seconde largeur à proximité d'une extrémité des parties opposées de ladite paroi traversante (64), ladite première largeur étant supérieure à ladite seconde largeur.

8. Système selon la revendication 7, ladite première largeur étant supérieure au diamètre d'une bande élastique (34) de sorte que l'ouverture soit conçue pour recevoir la bande élastique (34) et ladite seconde largeur étant inférieure au diamètre de la bande élastique (34) de sorte qu'il existe un ajustement serré entre la bande élastique (34) et la fenêtre (50) au niveau de la seconde largeur.

9. Système selon l'une quelconque des revendications précédentes, ladite fixation (26) ne remplissant pas l'espace interne (52) du crochet intégré (22).

10. Système selon l'une quelconque des revendications précédentes, ladite fixation (26) remplissant plus de 35 % et 75 % ou moins de l'espace interne (52) du crochet intégré (22).

11. Système selon l'une quelconque des revendications précédentes, ladite fixation (26) ne remplissant pas l'espace interne (52) du crochet intégré (22) de sorte qu'une partie non remplie de l'espace interne (52) entre la fixation (26) et la paroi latérale (23, 28) du crochet intégré (22) soit accessible par la fenêtre (50).

12. Système selon l'une quelconque des revendications précédentes lorsqu'elle dépend de la revendication 7, une profondeur de la fenêtre (50) depuis l'ouverture jusqu'à l'extrémité des parties opposées de la paroi traversante (64) étant supérieure à la distance mesurée depuis l'ouverture jusqu'à une surface de la fixation (26) lorsque l'aligneur orthodontique (10) est placé sur les dents (18) du patient.

13. Système selon l'une quelconque des revendications précédentes, comprenant en outre :
une bande élastique (34),
ladite bande élastique (34) pouvant être insérée dans la fenêtre (50) de manière à entrer en contact avec la fixation (26), et après insertion, ladite bande élastique (34) étant maintenue en place dans la fenêtre (50) par le crochet intégré (22).

14. Procédé de fabrication du système selon l'une quelconque des revendications précédentes comprenant :
la fourniture de la fixation (26) conçue pour être fixée à la dent (18) du patient ;
la fabrication de l'aligneur orthodontique (10) en préparant un moule (200) comprenant une ou plusieurs parties saillantes (204) dans une configuration d'une ou plusieurs des dents (18) du patient et un moule à crochet (212) s'étendant vers l'extérieur à partir desdites une ou plusieurs parties saillantes (204) ;
la déformation d'une pièce à usiner (100) sur le moule (200), y compris sur le moule à crochet (212), de manière à créer une zone déformée (102) de la pièce à usiner (100) comprenant un crochet préformé (22) ; et
le retrait d'une partie du crochet préformé (22) de manière à former la fenêtre (50).
